# FASCICULE DE BREVET EUROPEEN

(11) **EP 3 105 889 B1**
(45) Date de publication et mention de la délivrance du brevet: **14.07.2021**
(21) Numéro de dépôt: 15706897.4
(22) Date de dépôt: 09.02.2015
(51) Int. Cl.: H04L 12/26, H04L 12/851

(54) **NOTIFICATION D'UNE INFORMATION DE CONSOMMATION DE BANDE PASSANTE À UN FOURNISSEUR DE SERVICE DANS UN RÉSEAU DE TÉLÉCOMMUNICATIONS**
MITTEILUNG DER BANDBREITENVERBRAUCHSINFORMATIONEN AN EINEN DIENSTANBIETER IN EINEM TELEKOMMUNIKATIONSNETZ
NOTIFICATION OF BANDWIDTH CONSUMPTION INFORMATION TO A SERVICE PROVIDER IN A TELECOMMUNICATIONS NETWORK

(30) Priorité: 14.02.2014 FR 1451160
(43) Date de publication de la demande: 21.12.2016
(73) Titulaire: ORANGE, 75015 Paris (FR)
(72) Inventeur: MARJOU, Xavier, F-22300 Lannion (FR); FROMENTOUX, Gaël, F-22560 Pleumeur Bodou (FR); MARECHAL, Antonin, F-22300 Lannion (FR)
(74) Mandataire: Plasseraud IP
(86) Numéro de dépôt international: PCT/FR2015/050305
(87) Numéro de publication internationale: WO 2015/121573

(56) Documents cités:
- US-A1- 2010 284 300
- JAMES A BRUNETTI ET AL: "Open network quality of service and bandwidth control: Use cases, technical architecture, and business models", BELL LABS TECHNICAL JOURNAL, WILEY, CA, US, vol. 16, no. 2, 1 septembre 2011 (2011-09-01), pages 133-152, XP001569629, ISSN: 1089-7089, DOI: 10.1002/BLTJ.20507 [extrait le 2011-08-26]
- CHUAH C-N LAKSHMINARAYANAN SUBRAMANIAN ET AL: "DCAP: DETECTING MISBEHAVING FLOWS VIA COLLABORATIVE AGGREGATE POLICING", COMPUTER COMMUNICATION REVIEW, ACM, NEW YORK, NY, US, vol. 33, no. 5, 1 octobre 2003 (2003-10-01), pages 5-18, XP001224099, ISSN: 0146-4833, DOI: 10.1145/963985.963987
- None

## Description

La présente invention concerne le traitement de données dans un réseau de télécommunications.

Elle concerne plus particulièrement l'envoi de notifications d'un opérateur de réseau à des fournisseurs de service hébergeant et gérant des services dans le réseau, notamment des notifications relatives à la consommation de ressources (bande passante) par des utilisateurs de ces fournisseurs de service.

On entend par fournisseur de service toute entité apte à fournir tout type de service impliquant des échanges de flux de données sur le réseau de télécommunication. Le flux de données peut être transporté sur le réseau entre un terminal utilisateur et un serveur dédié du fournisseur de service, ou peut être transporté entre deux terminaux utilisateurs, lorsque les flux de données sont de type WebRTC par exemple (pour « Web Real Time Communication » en anglais). Dans ce dernier cas, le fournisseur de service permet la mise en liaison des deux utilisateurs qui échangent ensuite directement des flux de données WebRTC. Bien que l'invention soit décrite plus particulièrement dans le cadre de flux WebRTC, elle s'applique à tout type de flux de données.

Le protocole WebRTC est un protocole qui permet l'établissement de communications directement de pair à pair (« peer to peer » an anglais, ou P2P) entre deux navigateurs Internet installés sur deux terminaux utilisateur. Par exemple, il permet des communications en visio avec échange média en P2P, le partage de fichiers en P2P ou encore la VoIP (pour « Voice over Internet Protocol » en anglais).

Le protocole WebRTC propose trois interfaces de programmation (API) :
- l'API MediaStream (MS) permettant de récupérer des flux de données d'un utilisateur (vidéo via une webcam, audio via le microphone, etc) ;
- l'API PeerConnection (PC) permettant d'établir des communications P2P entre deux navigateurs d'utilisateurs et d'échanger des flux de données conversationnels (audio et vidéo pouvant être transportés avec la suite protocolaire SRTP/UDP) ;
- l'API DataChannel (DC) permettant l'échange de flux de données brutes (textes ou données binaires pouvant être transportés avec la suite protocolaire SCTP/DTLS/UDP).

L'utilisation des APIs WebRTC PC et DC génère des flux de données P2P qui utilisent généralement le protocole de transport UDP (pour « User Datagram Protocol »), mais parfois aussi le protocole de transport TCP (pour « Transmission Control Procotol »). On entend par flux de données un ensemble de paquets de données transmis de manière unidirectionnelle entre deux entités (deux terminaux utilisateurs en P2P ou entre un terminal utilisateur et un serveur). Un flux de données se caractérise par une adresse IP source (celle de l'émetteur du flux), un numéro de port source, une adresse IP de destination (celle du destinataire), un numéro de port de destinataire, et un protocole de transport.

Un fournisseur de service utilise bien souvent le maximum possible de bande passante sans prendre en compte des besoins en bande passante d'autres fournisseurs de service sur le réseau.

Dans le contexte WebRTC par exemple, le navigateur d'un terminal utilisateur ne prend pas en compte le débit utilisé, bien qu'il puisse néanmoins fournir des informations de statistiques (bits envoyés, bits reçus, données d'horodatage) qui permettent de mesurer le débit utilisé par une API WebRTC, celles-ci ne permettant toutefois pas de contrôler ce débit.

Certaines implémentations logicielles WebRTC proposent des mécanismes de prévention de congestion définis par le groupe de travail RMCAT (pour « RTP Media Congestion Avoidance Techniques ») pour le protocole SRTP pour l'API PC (pour « Secure Real-time Transport Protocol ») et des mécanismes inhérents au protocole SCTP (« pour Stream Control Transmission Protocol ») pour l'API DC.

Cependant, ces mécanismes sont des mécanismes intra-flux dans la mesure où ils empêchent uniquement le flux de données de congestionner localement le réseau de télécommunications. Ces implémentations logicielles ne prévoient pas de mécanismes inter-flux.

Or, certains flux de données peuvent consommer beaucoup plus de débit que d'autres flux de données, transportés par le protocole TCP par exemple, ce qui a pour conséquence d'impacter la bande passante disponible pour des flux de données TCP tels que des flux de données Youtube™ ou Facebook™. En particulier, un flux de données WebRTC peut être tellement consommateur en ressources qu'il peut impacter d'autres flux de données WebRTC.

Ainsi, une situation de congestion, ou de pré-congestion, peut avoir lieu dans le réseau de télécommunications, et un flux de données peut monopoliser une partie importante de la bande passante disponible, sans que le fournisseur de service en charge du flux de données ne soit conscient de la situation de congestion. Le fournisseur de service ne peut ainsi pas mettre en œuvre une politique appropriée pour réajuster l'allocation de bande passante de certains de ses utilisateurs et la situation de congestion n'est pas résolue.

Des travaux de l'IETF (« Internet Engineering Task Force ») sur le CONEX (pour « CONgestion EXposure ») offrent une solution technique selon laquelle des équipements réseau peuvent indiquer au fournisseur de service et aux autres éléments du réseau sur le chemin du flux de données, l'état d'une congestion dans le réseau. A cet effet, un drapeau de congestion est placé au niveau de la couche IP, drapeau qui est détectable par n'importe quelle entité par laquelle le flux de données transite.

Ainsi, la solution CONEX rend publique l'information de congestion, ce qui n'est pas souhaitable pour certains fournisseurs de service, pour des raisons de confidentialité. De plus, elle est uniquement compatible avec le protocole de transport TCP et ne traite pas les flux de données transportés sur UDP. Or, le protocole de transport UDP est de plus en plus utilisé en raison de sa rapidité. Le contrôle de la congestion par les solutions existantes n'est alors pas possible pour le contrôle des flux de données transportés sur UDP.

De manière générale, il existe un besoin de contrôler la bande passante consommée par des flux de données transportés selon un certain protocole, tout en maintenant un niveau de confidentialité élevé pour les fournisseurs de services en charge des flux de données.

Le document JAMES A BRUNETTI ET AL : "Open network quality of service and bandwidth control : Use cases, technical architecture, and business models", BELL LABS TECHNICAL JOURNAL, WILEY, CA, US, vol. 16, no. 2, 1 septembre 2011, pages 133-152, divulgue un réseau ouvert pour le contrôle de la qualité de service et de la bande passante.

La présente invention, qui est définie dans les revendications indépendantes, des modes de réalisation particulièrement avantageux étant définis dans les revendications dépendantes, vient améliorer cette situation.

Elle propose à cet effet un procédé de notification à un fournisseur de service selon la revendication 1, mis en œuvre dans un réseau de télécommunications, le procédé comprenant notamment les étapes suivantes:
- sélection d'un flux de données transportées dans le réseau de télécommunications pour au moins un terminal utilisateur du fournisseur de service;
- comparaison d'une valeur de bande passante consommée par le flux de données sélectionné avec un seuil de bande passante ;
- envoi d'une notification au fournisseur de service, la notification comprenant au moins un identifiant du flux sélectionné et une indication d'un résultat de la comparaison.

La présente invention permet ainsi de notifier directement le fournisseur de service d'une indication concernant la bande passante consommée par les flux de données qu'il gère. L'indication peut indiquer que le flux de données est non équitable ou qu'au contraire, il est équitable.

Ainsi, le fournisseur de service est le seul à disposer de l'indication contenue dans la notification, au contraire de la solution CONEX dans laquelle un drapeau est inséré dans une couche IP visible par tous les éléments réseau sur le chemin du flux de données. La notification comprend par ailleurs potentiellement plus d'informations qu'un simple drapeau ajouté au flux.

Comme décrit précédemment, on peut identifier un flux de données par un ensemble d'informations identifiant l'adresse de la source du flux de données, l'adresse du destinataire, et le protocole transportant le flux de données. Le flux de données peut cependant être identifié par d'autres informations, détaillées dans ce qui suit.

L'invention prévoit un envoi de notification au fournisseur de service hébergeant et gérant le flux de données. Aucune restriction n'est attachée à la nature du service, ni aux protocoles utilisés pour le transport du flux de données. Il peut par exemple s'agir d'un flux de données entre un utilisateur et un serveur du fournisseur de service, ou entre deux utilisateurs, en P2P. Aucune restriction n'est de plus attachée à la manière dont le fournisseur de service est identifié.

Le seuil de bande passante peut être fixe ou dynamique, et peut par exemple dépendre d'une valeur moyenne de bande passante consommée par utilisateur dans le réseau de télécommunications.

Aucune restriction n'est par ailleurs attachée aux moyens d'accès des utilisateurs au réseau de télécommunications. Par exemple, l'utilisation de n'importe quel terminal tel qu'un ordinateur portable ou fixe, smartphone, tablette tactile, PDA, peut être envisagée. L'accès peut par ailleurs se faire par un point d'accès fixe ou mobile.

Aucune restriction n'est attachée à l'utilisation faite par le fournisseur de service de l'indication du résultat de la comparaison. Le fournisseur de service peut par exemple rassembler plusieurs indications issues d'opérateurs de réseau différents afin de les comparer, ou peut utiliser l'indication pour restreindre les ressources allouées à certains utilisateurs.

Le flux de données est sélectionné sur détection d'un protocole utilisé pour le transport du flux de données. Un tel mode de réalisation permet de concentrer l'envoi de notification sur certains types de service, par exemple ceux qui sont très consommateurs en ressources et qui sont plus susceptibles de congestionner le réseau de télécommunications.

Dans un mode particulier de réalisation, le protocole peut être le protocole WebRTC et le flux de données peut être transporté entre au moins deux terminaux utilisateurs. Ainsi, les flux de données WebRTC, particulièrement consommateurs en ressources, peuvent faire l'objet d'une attention particulière afin de détecter des flux de données éventuellement non équitables.

Selon un mode de réalisation, le procédé comprend préalablement la détection d'au moins un message de négociation pour l'établissement du flux de données, la sélection du flux de données étant opérée sur la base du message de négociation.

On entend par message de négociation, un message préalable à un échange de flux de données, permettant de définir un protocole utilisé pour le flux de données, ou permettant de prévoir une politique de sécurité à mettre en place par exemple (échange de clés de chiffrement par exemple).

Le message de négociation peut par exemple être un message de type « poignée de main » défini par le protocole DTLS ou TLS. Un tel message, permettant de mettre en place une sécurisation des échanges de flux de données présente l'avantage de circuler en clair dans le réseau, et est donc accessible à n'importe quelle entité réseau en interception dans le réseau de télécommunications.

En complément ou en variante, le protocole WebRTC peut être détecté pour le transport du flux de données sur détection d'au moins une trame STUN échangée entre les deux terminaux utilisateurs préalablement à la détection du message de négociation selon le protocole TLS ou DTLS.

Le protocole WebRTC prévoit en effet un échange de trames STUN préalables à un envoi de message de négociation TLS/DTLS. Une trame STUN permet aux utilisateurs d'échanger les adresses (adresse IP/numéro de port) auxquelles ils souhaitent recevoir le flux de données WebRTC. La détection d'un échange de trame STUN entre deux utilisateurs, suivi d'un échange de message de négociation DTLS ou TLS entre ces mêmes utilisateurs permet de prévoir, de manière transparente et non intrusive, un échange prochain de flux de données WebRTC à sélectionner entre les deux utilisateurs.

De manière alternative, le message de négociation peut comprendre un premier attribut, la sélection du flux de données étant alors opérée sur la base de ce premier attribut.

On entend par premier attribut toute information comprise dans le message de négociation. Ce premier attribut peut être inséré, par exemple, dans un en-tête du message de négociation DTLS/TLS. Alternativement, ce premier attribut peut être inséré dans un certificat DTLS/TLS par exemple. Cette dernière implémentation facilite la mise en œuvre du système car le certificat est maitrisé par le fournisseur de service.

Le premier attribut peut identifier un protocole utilisé pour transporter le flux de données. Dans ce cas, la sélection du flux de données est opérée sur la base du flux ainsi identifié. Une telle méthode de sélection présente l'avantage d'être simplifiée comparativement à la détection successive de trames STUN et de message DTLS/TLS.

En complément ou en variante, le message de négociation comprend un deuxième attribut identifiant le fournisseur de service et permettant de contacter un ou plusieurs équipements réseaux de ce fournisseur de service, le message de notification étant envoyé au fournisseur de service ou à l'équipement identifié par ce deuxième attribut.

Cela permet de garantir un certain anonymat du fournisseur de service, moyennant le fait que le fournisseur de service ait contacté au préalable l'opérateur réseau pour obtenir cet identifiant, une table permettant alors d'établir la correspondance entre cet identifiant et le ou les équipements à contacter pour leur remettre la notification.

En complément ou en variante, ce deuxième attribut contient un indicateur du protocole utilisé pour transporter le flux de données et une adresse de serveur de notification. Ce mode de réalisation permet de notifier de manière simple le fournisseur de service à notifier. En outre, il permet d'éviter toute déclaration préalable de la part du fournisseur de service auprès de l'opérateur de réseau, le fournisseur de service n'ayant même pas à connaître l'opérateur de réseau selon ce mode de réalisation.

Selon un mode de réalisation de l'invention, le procédé peut comprendre une étape de stockage d'une base de données mettant en association des fournisseurs de services avec des identifiants réseau respectifs d'utilisateurs, l'utilisateur du fournisseur de service peut être identifié dans le réseau par un identifiant réseau donné et la notification peut être envoyée au fournisseur de service associé, dans la base de données, à l'identifiant réseau donné.

Ainsi, dans le cas où le message de négociation ne comprend pas le second attribut précité, un opérateur de réseau peut tout de même identifier un fournisseur de service à notifier au moyen d'une étape préalable déclarative des utilisateurs du fournisseur de service. L'observation des identifiants réseau source et destinataire est par ailleurs transparente et non intrusive.

Par exemple, l'identifiant réseau d'utilisateur peut comprendre un couple adresse IP/numéro de port.

Selon un mode de réalisation, l'identifiant du flux sélectionné, envoyé dans la notification, comprend au moins l'un des éléments suivants :
- un identifiant de l'opérateur du réseau ;
- au moins un identifiant de l'utilisateur ;
- une horodate d'un instant de comparaison de la bande passante consommée avec le seuil de bande passante.

Ces informations permettent au fournisseur de service d'identifier le flux de données avec précision, afin d'éventuellement restreindre la bande passante qui lui est allouée si ce flux de données est jugé non équitable.

En complément, la notification comporte en outre une recommandation d'ajustement de la bande passante allouée au flux par le fournisseur de service, lorsque la valeur de bande passante est supérieure au premier seuil.

Dans ce cas, le serveur de notification indique de manière avantageuse au fournisseur de service la restriction à appliquer au flux de données sélectionné.

Un deuxième aspect de l'invention concerne un système de notification à un fournisseur de service selon la revendication 12, le système comprenant notamment:
- une sonde configurée pour sélectionner un flux de données transportées dans un réseau de télécommunications pour au moins un terminal utilisateur du fournisseur de service;
- des moyens de comparaison pour comparer une valeur de bande passante consommée par le flux sélectionné avec un seuil de bande passante ;
- un serveur de notification agencé pour envoyer une notification au fournisseur de service, la notification comprenant au moins un identifiant du flux sélectionné et une indication d'un résultat de la comparaison.

Un troisième aspect de l'invention concerne un produit programme informatique selon la revendication 13 comportant des instructions pour la mise en œuvre du procédé selon le premier aspect de l'invention, lorsque ce programme est exécuté par un processeur.

D'autres caractéristiques et avantages de l'invention apparaîtront à l'examen de la description détaillée ci-après, et des dessins annexés sur lesquels:
- la figure 1 illustre un système de notification à un fournisseur de service, selon un mode de réalisation de l'invention ;
- la figure 2 est un diagramme illustrant les étapes d'un procédé de notification selon un mode de réalisation de l'invention ; et
- la figure 3 illustre un diagramme d'échanges dans le système représenté sur la figure 1, selon un mode de réalisation de l'invention.

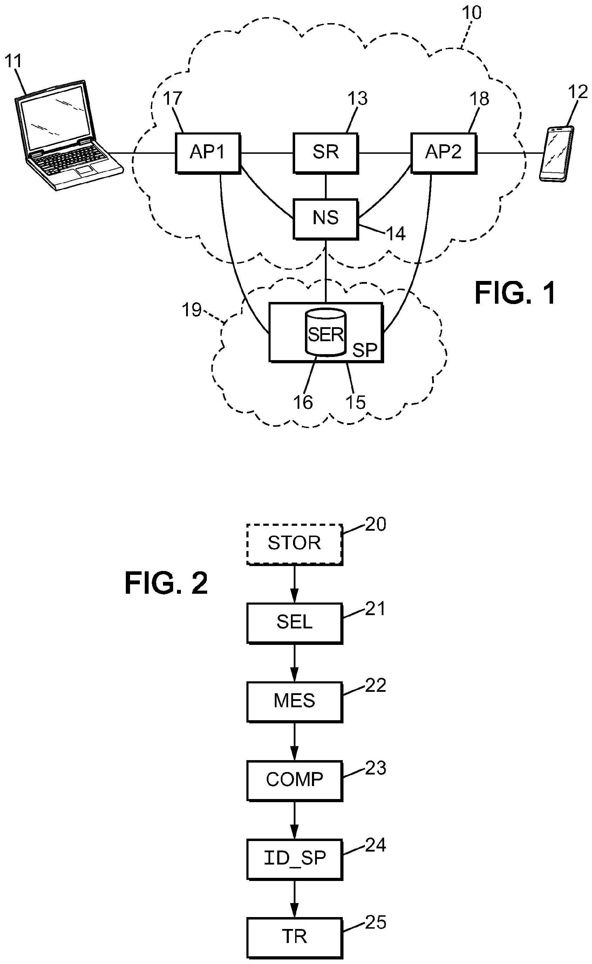

La **figure 1** illustre un système de notification à un fournisseur de service 15, selon un mode de réalisation de l'invention.

Un réseau de télécommunications 10 est accessible à un premier terminal utilisateur 11 via un premier point d'accès 17, et à un second terminal utilisateur 12 via un second point d'accès 18. Ce réseau de télécommunications 10 peut être le réseau de télécommunications d'un unique opérateur de télécommunications, typiquement relié au réseau Internet, ou bien être constitué de plusieurs réseaux appartenant à différents opérateurs de télécommunications, les points d'accès 17 et 18 pouvant alors chacun appartenir à des réseaux différents.

A titre d'exemple, le premier terminal utilisateur 11 peut être un ordinateur de type portable ou de bureau et le premier point d'accès 17 peut être un point d'accès filaire ou une borne Wi-fi. Le second terminal utilisateur 12 peut être un terminal mobile de télécommunications de type Smartphone ou tablette tactile par exemple, pouvant accéder à un réseau sans fil de télécommunications tel qu'un réseau 3G ou 4G par exemple. Dans ce cas, le second point d'accès 18 peut être un point d'accès de type NodeB/eNodeB.

Le premier terminal utilisateur peut accéder à un fournisseur de service 15 via le premier point d'accès 17. Dans l'exemple représenté, le fournisseur de service 15 est un fournisseur de service de type OTT (pour « Over The Top ») et permet, par exemple, des échanges de flux de données selon le protocole WebRTC entre le premier terminal utilisateur 11 et le second terminal utilisateur 12.

Le système comprend en outre au moins une sonde 13 située entre le premier point d'accès 17 et le second point d'accès 18. Dans un mode de réalisation avec deux sondes, une première sonde peut se trouver sur l'accès réseau associé au premier point d'accès 17 et une deuxième sonde peut se trouver sur l'accès réseau associé au deuxième point d'accès 18, ce qui permet de paramétrer un seuil de détection (en termes de bande passante) différent pour chaque point d'accès.

La (ou les) sonde(s) 13 est reliée à un serveur de notification 14 de l'opérateur du réseau de télécommunications 10. Le serveur de notification 14 est apte à communiquer avec un serveur de réception de notifications 16 du fournisseur de service 15, situé typiquement dans un réseau fournisseur de service 19 distinct et indépendant du réseau de télécommunications 10.

En référence à la figure 1, l'invention est représentée dans le contexte d'un fournisseur de service 15 de type OTT pour la mise en place de services P2P d'échange de données directement entre deux utilisateurs.

Toutefois, l'invention s'applique également à des services impliquant uniquement des échanges de données entre un serveur du fournisseur de service et un utilisateur. Dans ce cas, les flux de données peuvent être échangés entre le premier terminal utilisateur 11 et le fournisseur de service 15, et la sonde 13 peut alors être située entre le premier point d'accès 17 et le fournisseur de service 15.

La **figure 2** présente un diagramme illustrant les étapes d'un procédé de notification selon un mode de réalisation de l'invention.

Le procédé comprend une étape 21 de sélection d'un flux de données transportées dans le réseau de télécommunications 10 pour au moins un terminal utilisateur 11 du fournisseur de service 15. La sélection est basée sur le protocole utilisé pour le transport du flux de données.

De manière complémentaire, la sélection d'un flux de données peut comprendre la détection d'un message de négociation pour l'établissement du flux de données, et la sélection du flux de données est opérée sur la base de ce message de négociation. A cet effet, le message de négociation peut comprendre un premier attribut, la sélection du flux de données étant alors opérée en fonction du premier attribut détecté dans le message de négociation. Le premier attribut peut notamment identifier le protocole utilisé pour le transport du flux de données, afin de procéder à la sélection du flux de données en fonction du protocole de transport utilisé par ce flux.

Le message de négociation peut en outre comprendre un deuxième attribut identifiant le fournisseur de service 15. Ce deuxième attribut sera décrit ultérieurement.

Dans l'exemple de la figure 1, le flux de données est un flux de données selon le protocole WebRTC échangé entre le premier terminal utilisateur 11 et le second terminal utilisateur 12. L'étape 21 peut ainsi être mise en œuvre par la sonde 13, lorsque celle-ci détecte que le flux de données entre le premier terminal utilisateur 11 et le second terminal utilisateur 12 est un flux de données WebRTC.

Comme indiqué précédemment, la détection d'un flux WebRTC peut être basée sur la détection préalable d'un message de négociation précédant habituellement ce type de flux. De manière préférentielle, le message de négociation est un message de type « poignée de main » (« handshake » en anglais) tel que défini par le protocole de chiffrement applicatif TLS (pour « Transport Layer Security ») ou DTLS (pour « Datagram Transport Layer Security »). Le protocole TLS est généralement utilisé avec le protocole de transport TCP tandis que le protocole DTLS est utilisé avec le protocole de transport UDP. Dans la suite de l'exposé, le protocole DTLS en combinaison avec le protocole UDP est considéré, à titre illustratif. Le protocole de transport WebRTC est utilisé de manière préférentielle avec le protocole de chiffrement applicatif DTLS, l'API PC utilisant le protocole SRTP sur DTLS tandis que l'API DC utilise le protocole SCTP sur DTLS.

Le message de type poignée de main est échangé entre le premier terminal utilisateur 11 et le second terminal utilisateur 12 préalablement à l'échange de données dans le flux WebRTC. La sonde 13 peut donc détecter le message de négociation DTLS qui permet d'établir des échanges sécurisés par DTLS.

Selon l'invention, plusieurs modes de réalisation sont prévus pour la détection d'un flux de données WebRTC.

Selon un premier mode de réalisation, le message de négociation DTLS comprend un premier attribut identifiant le protocole WebRTC en tant que protocole utilisé pour le transport du flux de données, la détection de ce premier attribut permettant la sélection du flux de données consécutif au message de négociation. Le message de négociation peut également comprendre un deuxième attribut identifiant le fournisseur de service 15, ainsi que d'autres attributs supplémentaires.

Le message de négociation DTLS peut par exemple comprendre les attributs suivants :
- *application_protocol*=*sctp-webrtc-datachannel* : premier attribut précité, qui identifie le protocole ou service utilisé pour le transport du flux de données qui sera crypté par DTLS. Dans le cas présent, il s'agit de l'API DC de WebRTC) ;
- *service_provider*=*notification.dailymotion.com* : deuxième attribut identifiant le fournisseur de service 15. En particulier, le deuxième attribut identifie le serveur de réception de notifications 16 du fournisseur de service 15. Le deuxième attribut peut par exemple être une URI (pour « Uniform Resource Identifier »). L'URI peut comprendre une adresse du serveur de réception de notification 16 du fournisseur de service 15, ou bien un identifiant générique du fournisseur de service 15 ;
- *version-application-protocol*=*00* : attribut annonçant la version du protocole ou du service utilisé pour le transport du flux de données ;
- *user_identificator=161c50b2* : attribut identifiant l'utilisateur du premier terminal utilisateur 11 ou du second terminal utilisateur 12, ou de ces deux terminaux, auprès du fournisseur de service 15.

Les quatre attributs précités (ou n'importe quelle combinaison obtenue à partir des quatre attributs précités) peuvent être regroupés au sein d'une extension qui peut être incluse dans des messages de type « ClientHello » et « ServerHello ». Cette extension peut être insérée dans un en-tête du message de négociation DTLS. De manière alternative, elle peut être insérée dans un certificat DTLS du message de négociation DTLS.

Le choix d'un message de négociation DTLS (ou TLS) pour l'insertion de l'extension précitée est motivée par les raisons suivantes :
- le protocole DTLS présente l'avantage d'être un protocole en clair. Le contenu du message DTLS est donc accessible à la sonde 13 ;
- les données au niveau applicatif sont bien souvent cryptées, et ne peuvent donc être utilisées pour l'insertion de l'extension (qui serait indétectable par la sonde 13) ;
- au niveau de la couche de transport, les protocoles TCP et UDP ne permettent pas de transporter d'information relative à l'application ou au service, telle que le deuxième attribut de l'extension identifiant le fournisseur de service 15;
- les couches inférieures, comme la couche IP, ne possède aucun en-tête disponible pour une telle extension.

Lors de cette étape 21, la sonde 13 peut en outre enregistrer l'identifiant réseau d'au moins un utilisateur impliqué dans le flux de données sélectionné. Un identifiant réseau d'utilisateur peut par exemple être un couple adresse IP/numéro de port du terminal utilisateur 11 ou 12. De manière alternative, cet identifiant réseau d'utilisateur peut n'être qu'une adresse IP du terminal utilisateur 11 ou 12.

Selon un second mode de réalisation permettant la sélection d'un flux de données même quand le message de négociation DTLS ne comprend pas l'extension précitée, cette sélection est opérée sur la base d'un enchainement spécifique de messages de signalisation caractérisant le flux en question.

Ainsi, avant tout échange de données WebRTC, il peut être requis des deux utilisateurs d'échanger les adresses IP/numéros de port sur lesquels le flux de données WebRTC sera reçu. A cet effet, le protocole ICE (pour « Interactive Connectivity Establishment ») indique aux terminaux utilisateurs 11 et 12 de transmettre au moins une trame STUN afin d'échanger leurs adresses IP/numéros de port.

Un tel échange d'adresses intervient avant l'échange des messages de négociation DTLS. En d'autres termes, après l'envoi d'une première trame STUN du premier terminal 11 vers le second terminal 12 et l'envoi d'une seconde trame STUN du second terminal 12 vers le premier terminal 11, les terminaux utilisateurs 11 et 12 effectuent un échange de messages de négociation DTLS comme décrit précédemment, afin de crypter le flux de données WebRTC. Un échange d'au moins une trame STUN suivi d'un échange d'un message de négociation DTLS, entre les mêmes terminaux utilisateurs, permet donc d'identifier un flux de données WebRTC, car ce protocole WebRTC est le seul actuellement à utiliser de tels échanges de manière combinée.

Ainsi, sur détection d'un échange de trame STUN suivi d'une détection d'un échange de message de négociation DTLS entre les terminaux utilisateurs 11 et 12, la sonde 13 enregistre les adresses IP/numéros de port des terminaux utilisateurs 11 et 12, en vue de sélectionner le flux de données WebRTC échangé consécutivement à ces échanges.

Après l'étape 21 de sélection d'un flux de données, la sonde 13 signale au serveur de notification 14 qu'un flux de données a été sélectionné, et lui transmet les adresses IP/ numéros de port des terminaux utilisateurs 11 et 12 échangeant le flux. Dans le cas où la sonde 13 détecte en outre le second attribut identifiant le fournisseur de service, ce second attribut est également transmis au serveur de notification 14. De manière complémentaire, l'attribut « user_identificator » peut également être transmis au serveur de notification 14.

Le procédé comprend une étape 22 de mesure de la bande passante consommée par le flux de données. Une telle étape peut par exemple être mis en œuvre par au moins un des points d'accès 17, 18, et les mesures de bande passante sont envoyées au serveur de notification 14 avec les données identifiant le flux de données (adresses IP source et de destination, numéros de port source et de destination, protocole de transport). Le serveur de notification 14 peut ainsi compiler les mesures de bande passante de nombreux flux de données.

Lorsque le serveur de notification 14 reçoit une mesure de bande passante d'un flux de données qui a été sélectionné à l'étape 21, il met en œuvre une étape 23 de comparaison de la valeur de bande passante pour le flux de données (par exemple la bande passante totale), avec un seuil de bande passante. Si la valeur de bande passante est inférieure au seuil de bande passante, le flux de données est considéré comme équitable. Dans le cas contraire, il est considéré comme non équitable. Afin de compiler ces mesures, le serveur de notification 14 peut intégrer un équipement de type « Analytics/BigData » permettant d'archiver et de dégager les flux de données ayant des valeurs de bandes passantes caractéristiques des flux équitables et celles des flux non-équitables, par exemple en fonction du type d'accès (point d'accès IP fixe 17 ou mobile 18) et de son utilisation par les autres flux de données.

Les mesures effectuées par les points d'accès 17, 18, voire alternativement par la sonde 13, peuvent être remontées de la sonde 13 vers le serveur de notification 14 à intervalles temporels réguliers par exemple.

En variante, l'étape 23 de comparaison peut être mise en œuvre directement par le point d'accès mesurant la bande passante consommée, et seul le résultat de la comparaison est transmis au serveur de notification 14 avec les données identifiant le flux de données. Dans ce cas, les résultats d'une comparaison effectuée par le point d'accès 17 ou 18 peuvent être remontés de la sonde 13 vers le serveur de notification à intervalles réguliers, ou, en variante, dès que le résultat de la comparaison change (dès que la valeur de la bande passante consommée atteint le seuil de bande passante par exemple).

Le seuil de bande passante peut être prédéfini à une valeur fixe ou peut correspondre à la valeur moyenne de la bande passante consommée par utilisateur dans le réseau de télécommunications. Aucune restriction n'est attachée à la détermination du seuil de bande passante qui peut être fixe ou dynamique.

Sur obtention du résultat de la comparaison de la valeur de bande passante consommée par le flux de données sélectionné avec le seuil de bande passante, la présente invention prévoit de notifier directement le fournisseur de service hébergeant et gérant le service entre les utilisateurs, d'une indication du résultat de cette comparaison.

A cet effet, le serveur de notification 14 identifie, à une étape 24, le fournisseur de service à notifier. Une telle identification dépend des informations qui ont été acquises par la sonde 13 lors de l'étape de sélection du flux de données.

Selon le premier mode de réalisation, la sonde 13 a accédé à l'étape 21 à au moins un attribut dans le message de négociation, pouvant comprendre le second attribut identifiant le fournisseur de service 14. Comme précédemment détaillé, le second attribut *service_provider* peut comprendre une URI du fournisseur de service 14.

Dans le cas où l'URI comprend une adresse du serveur de réception de notification 16, et où l'URI a été transmise par la sonde 13 au serveur de notification 14, le serveur de notification peut envoyer une notification au serveur de réception de notification 16, à l'adresse indiquée dans l'URI, la notification comprenant au moins un identifiant du flux de données sélectionné et une indication d'un résultat de la comparaison. Un tel mode de réalisation présente l'avantage que les fournisseurs de service du réseau de télécommunication 10 n'ont pas à se signaler au préalable auprès de l'opérateur de ce réseau 10, et n'ont ainsi pas à connaître l'opérateur du réseau 10.

Dans le cas où l'URI comprend un identifiant générique du fournisseur de service 15, le serveur de notification 14 peut stocker une base de données mettant en correspondance des identifiants génériques de fournisseurs de service avec des adresses de serveur de réception de notifications respectifs. Le stockage d'une telle base de données peut être effectué à une étape initiale 20 au cours de laquelle les fournisseurs de service du réseau de télécommunications 10 déclarent auprès de l'opérateur du réseau les adresses auxquelles ils souhaitent être notifiés.

Selon le second mode de réalisation où le message de négociation détecté par la sonde 13 à l'étape 21 ne comprend pas l'extension précitée et où le serveur de notification 14 ne reçoit donc aucun attribut identifiant le fournisseur de service 15, le serveur de notification 14 peut alors stocker une base de données mettant en correspondance des fournisseurs de service hébergeant et gérant l'échange du flux de données, avec des identifiants réseau respectifs d'utilisateurs. A cet effet, lors d'une étape 20 préalable, les fournisseurs de service souhaitant être notifiés peuvent identifier les utilisateurs pour lesquels ils souhaitent recevoir une notification concernant la consommation en bande passante du flux de données.

Ainsi, le serveur de notification 14 envoie au serveur de réception de notification 16, à une étape 25, une notification comprenant au moins un identifiant du flux de données sélectionné et une indication d'un résultat de la comparaison de l'étape 23.

Par exemple, la notification peut comprendre un fichier XML ou POST http avec différents paramètres.

Les paramètres en question, dans le contexte d'un flux de données P2P, peuvent comprendre une combinaison des paramètres indiqués dans le tableau 1 ci-dessous.

**Tableau 1 : paramètres de la notification**

| **Paramètres des notifications** | |
|---|---|
| Network identifier | Identité de l'émetteur de la notification (opérateur réseau) |
| user_1 | Identifiant du premier terminal utilisateur (par exemple adresse IP/numéro de port ou identifiant privé user_identificator de l'extension) |
| user_2 | Identifiant du second terminal utilisateur (par exemple adresse IP/numéro de port ou identifiant privé user_identificator de l'extension) |
| detect_time | Horodate d'un instant de comparaison de la bande passante consommée avec ledit seuil de bande passante |
| error_type | Type d'erreur rencontrée (type de congestion) |
| recommandation | Message de recommandations fourni par l'opérateur |

Le paramètre error_type peut indiquer plusieurs types d'erreur en fonction de sa valeur, par exemple:
- 00 : congestion détectée ;
- 01 : utilisation inadaptée ;
- 10 et 11 : autres types d'erreur ou, au contraire, utilisation adaptée ou aucune congestion détectée.

D'autres paramètres que le paramètre error_type peuvent être utilisés pour indiquer le résultat de la comparaison.

L'attribut recommandation peut par exemple être au format JSON (pour «Java Script Object Notation), peut dépendre de l'attribut error_type et peut comprendre :
- {b=X} : indique la valeur maximale de bande passante sur l'API DC (attribut B du protocole « Session Data Protocol » SDP) ;
- tout autre type de recommandation.

Cette notification peut être encryptée, par DTLS ou TLS par exemple.

Le fournisseur de service 15 peut utiliser la notification dans des buts différents :
- afin d'enrichir des statistiques du fournisseur de service 15 au niveau du réseau 10 de l'opérateur, pour pouvoir comparer plusieurs opérateurs entre eux ;
- afin de déclencher une action concrète du fournisseur de service 15 : en particulier, réduire le débit disponible pour un flux de données WebRTC considéré comme non équitable.

La figure 1 présente un unique fournisseur de service 15. Toutefois, le serveur de notification 14 peut être en charge de notifier une pluralité de fournisseurs de service. A cet effet, une pluralité de sondes 13 peuvent être réparties dans le réseau 10 de manière à pouvoir sélectionner des flux de données entre n'importe quels utilisateurs.

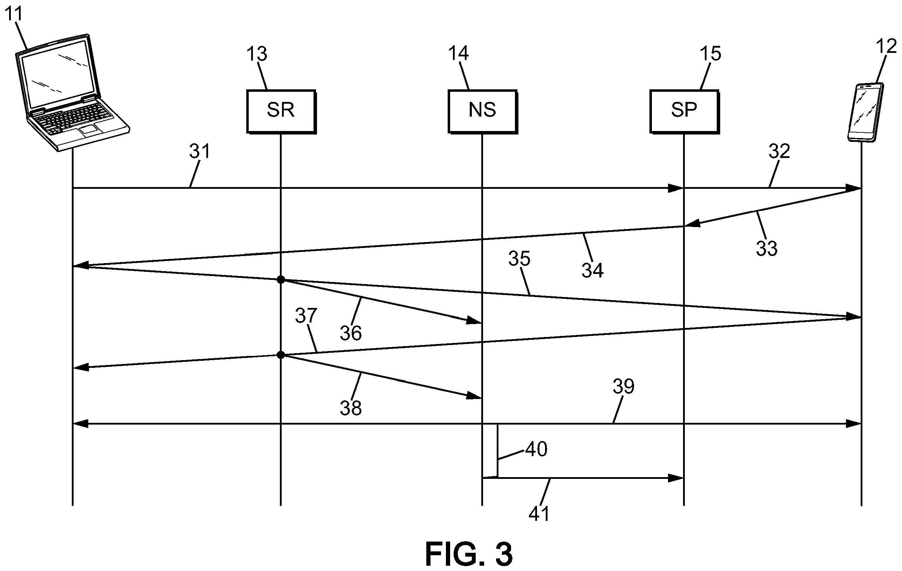

La figure 3 présente un diagramme d'échanges dans le système de notification de la figure 1, selon un mode de réalisation de l'invention.

La figure 3 illustre une mise en œuvre bien particulière de l'invention et est donnée ici à titre purement illustratif. Elle se place dans le contexte d'un fournisseur de service de type OTT pour la mise en œuvre d'un service WebRTC entre deux utilisateurs respectifs des terminaux 11 et 12. On se place dans le premier mode de réalisation de l'étape 21 de la figure 2, dans lequel l'extension du message de négociation DTLS comprend les quatre attributs présentés ci-dessus.

Le premier terminal utilisateur 11 envoie (étape 31) un message d'initiation de session, via le protocole SDP par exemple, au fournisseur de service 15, en vue d'établir une session d'échange de flux de données WebRTC avec l'utilisateur du second terminal utilisateur 12. Le message d'initiation de session est transféré (étape 32) par le fournisseur de service 15 au second terminal utilisateur 12.

Lorsque le deuxième utilisateur accepte l'initiation de session, le second terminal utilisateur 12 renvoie (étape 33) un message d'acceptation, toujours selon le protocole SDP, au fournisseur de service 15, lequel transfère le message d'acceptation au premier terminal utilisateur 11 (étape 34).

S'ensuivent ensuite des échanges de messages de type poignée de main (« Handshake ») DTLS en vue de crypter le flux de données WebRTC selon le protocole DTLS.

Un message de négociation DTLS est ainsi envoyé du premier terminal utilisateur 11 au second terminal utilisateur 12 (étape 35). Le message de négociation DTLS selon cet exemple comprend les quatre attributs de l'extension définie précédemment.

La sonde 13, sur le chemin réseau entre les terminaux utilisateurs 11 et 12, est apte à détecter, dans le message de négociation DTLS, le premier attribut *application_protocol* et en déduit que le flux de données qui sera échangé entre les terminaux utilisateurs 11 et 12 est un flux de données WebRTC. La sonde 13 sélectionne alors ce flux de données WebRTC et transmet au serveur de notification 14 (étape 36) un identifiant de ce flux de données sélectionné ainsi que le second attribut comprenant l'identifiant du fournisseur de service 15, extrait du message de négociation DTLS.

A noter que la sélection du flux de données WebRTC peut également avoir lieu sur le chemin retour de la poignée de main DTLS, lors de l'envoi (étape 37) d'un message de négociation DTLS du second terminal utilisateur 12 vers le premier terminal utilisateur 11. Dans ce cas, la sonde transmet au serveur de notification (étape 38) un identifiant du flux de données sélectionné (les identifiants source et destinataire sont inversés par rapport à l'étape 36).

Les échanges WebRTC ont ensuite lieu de manière bidirectionnelle (étape 39) entre le premier terminal utilisateur 11 et le second terminal utilisateur 12.

Des informations relatives à la bande passante consommée par le flux de données WebRTC peuvent être remontées vers le serveur de notification, en vue d'une comparaison (étape 40) entre une valeur de bande passante consommée et un seuil de bande passante, comme décrit précédemment et une notification est envoyée (étape 41) du serveur de notification 14 au fournisseur de service 15 (par exemple au serveur de réception de notification 16) au moyen du second attribut (URI du fournisseur de service 15) de l'extension du message de négociation DTLS.

La présente invention permet ainsi d'identifier le fournisseur de service à notifier de manière individuelle, ce qui améliore la confidentialité des données échangées entre l'opérateur de réseau et le fournisseur de service, comparativement à la solution CONEX. La solution proposée est par ailleurs compatible avec n'importe quel service utilisant n'importe quel protocole de transport. Par exemple, elle est compatible avec les flux WebRTC utilisant le protocole UDP de transport.

## Revendications

1. Procédé de notification à un fournisseur de service (15), mis en œuvre dans un réseau de télécommunications (10) par un système de notification à un fournisseur de service (15), le procédé comprenant les étapes suivantes:
- sélection (21) d'un flux de données transportées dans le réseau de télécommunications pour au moins un terminal utilisateur (11, 12) dudit fournisseur de service, le flux de données étant sélectionné sur détection d'un protocole utilisé pour le transport du flux de données;
- comparaison (23) d'une valeur de bande passante consommée par ledit flux de données sélectionné avec un seuil de bande passante ;
- envoi (25) d'une notification au fournisseur de service, la notification comprenant au moins un identifiant du flux de données sélectionné et une indication d'un résultat de ladite comparaison, dans lequel la notification comporte en outre une recommandation de réduction de la bande passante allouée audit flux par ledit fournisseur de service (15), lorsque la valeur de bande passante est supérieure audit premier seuil.

2. Procédé selon la revendication 1, dans lequel ledit protocole est le protocole WebRTC et le flux de données est transporté entre au moins deux terminaux utilisateurs (11, 12)

3. Procédé selon l'une des revendications précédentes, comprenant préalablement la détection d'au moins un message de négociation pour l'établissement du flux de données, ladite sélection du flux de données étant opérée sur la base dudit message de négociation.

4. Procédé selon la revendication 3, dans lequel ledit message de négociation est un message de type poignée de main défini par le protocole DTLS ou TLS.

5. Procédé selon les revendications 2 et 4, dans lequel le protocole WebRTC est détecté pour le transport du flux de données sur détection d'au moins une trame STUN échangée entre les deux terminaux utilisateurs (11, 12) préalablement à la détection du message de négociation selon le protocole TLS ou DTLS.

6. Procédé selon l'une quelconque des revendications 3 et 4, dans lequel le message de négociation comprend un premier attribut, ladite sélection du flux de données étant opérée sur la base dudit premier attribut.

7. Procédé selon la revendication 6, dans lequel ledit premier attribut identifie un protocole utilisé pour transporter le flux de données.

8. Procédé selon l'une quelconque des revendications 6 et 7, dans lequel le message de négociation comprend un deuxième attribut identifiant le fournisseur de service (15), ledit message de notification étant envoyé au fournisseur de service identifié par ledit deuxième attribut.

9. Procédé selon l'une quelconque des revendications 1 à 8, comprenant une étape de stockage (20) d'une base de données mettant en association des fournisseurs de services avec des identifiants réseau respectifs d'utilisateurs (11, 12),
dans lequel ledit terminal utilisateur du fournisseur de service (15) est identifié dans le réseau (10) par un identifiant réseau donné;
dans lequel la notification est envoyée au fournisseur de service associé, dans la base de données, à l'identifiant réseau donné.

10. Procédé selon la revendication 9, dans lequel un identifiant réseau d'utilisateur comprend un couple adresse IP/numéro de port.

11. Procédé selon l'une quelconque des revendications précédentes, dans lequel l'identifiant du flux sélectionné comprend au moins l'un des éléments suivants :
- un identifiant de l'opérateur dudit réseau ;
- au moins un identifiant dudit utilisateur ;
- une horodate d'un instant de comparaison de la bande passante consommée avec ledit seuil de bande passante.

12. Système de notification à un fournisseur de service (15), le système comprenant :
- une sonde (13) configurée pour sélectionner un flux de données transportées dans un réseau de télécommunications (10) pour au moins un terminal utilisateur dudit fournisseur de service, le flux de données étant sélectionné sur détection d'un protocole utilisé pour le transport du flux de données;
- des moyens de comparaison (17, 18, 14) pour comparer une valeur de bande passante consommée par ledit flux de données sélectionné avec un seuil de bande passante ;
- un serveur de notification (14) agencé pour envoyer une notification au fournisseur de service, la notification comprenant au moins un identifiant du flux sélectionné et une indication d'un résultat de ladite comparaison, dans lequel la notification comporte en outre une recommandation de réduction de la bande passante allouée audit flux par ledit fournisseur de service (15), lorsque la valeur de bande passante est supérieure audit premier seuil.

13. Produit programme informatique comportant des instructions pour la mise en œuvre du procédé selon l'une des revendications 1 à 11, lorsque ce programme est exécuté par un processeur.

## Patentansprüche

1. Verfahren zur Mitteilung an einen Dienstanbieter (15), das in einem Telekommunikationsnetz (10) durch ein System zur Mitteilung an einen Dienstanbieter (15) durchgeführt wird, das Verfahren umfassend die folgenden Schritte:
- Auswählen (21) eines Stroms von Daten, die im Telekommunikationsnetz für mindestens ein Benutzerendgerät (11, 12) des Dienstanbieters transportiert werden, wobei der Datenstrom bei Detektion eines Protokolls ausgewählt wird, das für den Transport des Datenstroms genutzt wird;
- Vergleichen (23) eines Werts einer vom ausgewählten Datenstrom verbrauchten Bandbreite mit einem Bandbreiten-Schwellenwert;
- Senden (25) einer Mitteilung an den Dienstanbieter, wobei die Mitteilung mindestens eine Kennung des ausgewählten Datenstroms und eine Angabe eines Ergebnisses des Vergleichs umfasst, wobei die Mitteilung ferner eine Empfehlung zur Verringerung der Bandbreite, die dem Strom vom Dienstanbieter (15) zugeteilt ist, wenn der Bandbreitenwert über dem ersten Schwellenwert liegt, aufweist.

2. Verfahren nach Anspruch 1, wobei das Protokoll das WebRTC-Protokoll ist und der Datenstrom zwischen mindestens zwei Benutzerendgeräten (11, 12) transportiert wird.

3. Verfahren nach einem der vorhergehenden Ansprüche, zuvor umfassend das Detektieren mindestens einer Aushandlungsmitteilung zur Herstellung des Datenstroms, wobei die Auswahl des Datenstroms auf der Grundlage der Aushandlungsmitteilung vorgenommen wird.

4. Verfahren nach Anspruch 3, wobei die Aushandlungsmitteilung eine Handshake-Mitteilung ist, die vom DTLS- oder TLS-Protokoll definiert ist.

5. Verfahren nach den Ansprüchen 2 und 4, wobei das WebRTC-Protokoll für den Transport des Datenstroms bei Detektion mindestens eines STUN-Rahmens detektiert wird, der zwischen den zwei Benutzerendgeräten (11, 12) vor der Detektion der Aushandlungsmitteilung gemäß dem DTLS- oder TLS-Protokoll ausgetauscht wird.

6. Verfahren nach einem der Ansprüche 3 und 4, wobei die Aushandlungsmitteilung ein erstes Attribut umfasst, wobei die Auswahl des Datenstroms auf der Grundlage des ersten Attributs vorgenommen wird.

7. Verfahren nach Anspruch 6, wobei das erste Attribut ein Protokoll identifiziert, das genutzt wird, um den Datenstrom zu transportieren.

8. Verfahren nach einem der Ansprüche 6 und 7, wobei die Aushandlungsmitteilung ein zweites Attribut umfasst, das den Dienstanbieter (15) identifiziert, wobei die Aushandlungsmitteilung an den Dienstanbieter gesendet wird, der durch das zweite Attribut identifiziert wird.

9. Verfahren nach einem der Ansprüche 1 bis 8, umfassend einen Schritt des Speicherns (20) einer Datenbank, die Dienstanbieter jeweiligen Netzkennungen von Benutzern (11, 12) zuordnet,
wobei das Benutzerendgerät des Dienstanbieters (15) durch eine bestimmte Netzkennung im Netz (10) identifiziert wird;
wobei die Mitteilung an den Dienstanbieter gesendet wird, der in der Datenbank dem bestimmten Netzkennung zugeordnet ist.

10. Verfahren nach Anspruch 9, wobei eine Benutzer-Netzkennung ein IP-Adresse/Portnummer-Paar umfasst.

11. Verfahren nach einem der vorhergehenden Ansprüche, wobei die Kennung des ausgewählten Stroms mindestens eins der folgenden Elemente umfasst:
- eine Kennung des Betreibers des Netzes;
- mindestens eine Kennung des Benutzers;
- einen Zeitstempel eines Vergleichszeitpunkts der verbrauchten Bandbreite mit dem Bandbreiten-Schwellenwert.

12. System zur Mitteilung an einen Dienstanbieter (15), das System umfassend:
- eine Sonde (13), die dazu ausgebildet ist, einen Strom von Daten auszuwählen, die in einem Telekommunikationsnetz (10) für mindestens ein Benutzerendgerät des Dienstanbieters transportiert werden, wobei der Datenstrom bei Detektion eines Protokolls ausgewählt wird, das für den Transport des Datenstroms genutzt wird;
- Vergleichsmittel (17, 18, 14) zum Vergleichen eines Werts einer vom ausgewählten Datenstrom verbrauchten Bandbreite mit einem Bandbreiten-Schwellenwert;
- einen Mitteilungsserver (14), der zum Senden einer Mitteilung an den Dienstanbieter angeordnet ist, wobei die Mitteilung mindestens eine Kennung des ausgewählten Datenstroms und eine Angabe eines Ergebnisses des Vergleichs umfasst, wobei die Mitteilung ferner eine Empfehlung zur Verringerung der Bandbreite, die dem Strom vom Dienstanbieter (15) zugeteilt ist, wenn der Bandbreitenwert über dem ersten Schwellenwert liegt, aufweist.

13. Computerprogrammprodukt, umfassend Anweisungen für die Umsetzung des Verfahrens nach einem der Ansprüche 1 bis 11, wenn dieses Programm von einem Prozessor ausgeführt wird.

## Claims

1. Method for notifying a service provider (15), which is implemented in a telecommunications network (10) by a system for notifying a service provider (15), the method comprising the following steps:
- selecting (21) a data stream transported in the telecommunications network for at least one user terminal (11, 12) of said service provider, the data stream being selected on detection of a protocol used for the transport of the data stream;
- comparing (23) a value of the bandwidth consumed by said selected data stream with a bandwidth threshold;
- sending (25) a notification to the service provider, the notification comprising at least an identifier of the selected data stream and an indication of a result of said comparison, wherein the notification further comprises a recommendation to decrease the bandwidth allocated to said stream by said service provider (15), when the value of the bandwidth is higher than said first threshold.

2. Method according to Claim 1, wherein said protocol is the WebRTC protocol and the data stream is transported between at least two user terminals (11, 12).

3. Method according to one of the preceding claims, comprising beforehand detecting at least one negotiation message used to set up the data stream, the data stream being selected on the basis of said negotiation message.

4. Method according to Claim 3, wherein said negotiation message is a message of handshake type defined by the DTLS or TLS protocol.

5. Method according to Claims 2 and 4, wherein the WebRTC protocol is detected for the transport of the data stream on detection of at least one STUN frame exchanged between the two user terminals (11, 12) prior to the detection of the negotiation message according to the TLS or DTLS protocol.

6. Method according to either one of Claims 3 and 4, wherein the negotiation message comprises a first attribute, the data stream being selected on the basis of said first attribute.

7. Method according to Claim 6, wherein said first attribute identifies a protocol used to transport the data stream.

8. Method according to either one of Claims 6 and 7, wherein the negotiation message comprises a second attribute identifying the service provider (15), said notification message being sent to the service provider identified by said second attribute.

9. Method according to any one of Claims 1 to 8, comprising a step (20) of storing a database associating service providers with respective network identifiers of users (11, 12),
wherein said user terminal of the service provider (15) is identified in the network (10) by a given network identifier;
wherein the notification is sent to the service provider associated, in the database, with the given network identifier.

10. Method according to Claim 9, wherein a user network identifier comprises a pair consisting of an IP address and a port number.

11. Method according to any one of the preceding claims, wherein the identifier of the selected stream comprises at least one of the following elements:
- an identifier of the operator of said network;
- at least one identifier of said user;
- a timestamp of a time of comparison of the consumed bandwidth with said bandwidth threshold.

12. System for notifying a service provider (15), the system comprising:
- a probe (13) configured to select a data stream transported in the telecommunications network (10) for at least one user terminal of said service provider, the data stream being selected on detection of a protocol used for the transport of the data stream;
- means (17, 18, 14) for comparing a value of the bandwidth consumed by said selected data stream with a bandwidth threshold;
- a notification server (14) arranged to send a notification to the service provider, the notification comprising at least an identifier of the selected data stream and an indication of a result of said comparison, wherein the notification further comprises a recommendation to decrease the bandwidth allocated to said stream by said service provider (15), when the value of the bandwidth is higher than said first threshold.

13. Computer program product comprising instructions for implementing the method according to one of Claims 1 to 11, when this program is executed by a processor.
